# FASCICULE DE BREVET EUROPEEN

(11) **EP 4 500 067 B1**
(45) Date de publication et mention de la délivrance du brevet: **11.03.2026**
(21) Numéro de dépôt: 23714557.8
(22) Date de dépôt: 28.03.2023
(51) Int. Cl.: F16L 55/10, F16K 15/03

(54) **DISPOSITIF PARE POUSSIÈRE POUR RACCORDS HYDRAULIQUES ET ÉLÉMENT DE CONNEXION HYDRAULIQUE**
STAUBSCHUTZVORRICHTUNG FÜR HYDRAULIKAGGREGATE UND HYDRAULIKANSCHLUSSELEMENT
DUST-SHIELD DEVICE FOR HYDRAULIC FITTINGS AND HYDRAULIC CONNECTION ELEMENT

(30) Priorité: 28.03.2022 FR 2202759
(43) Date de publication de la demande: 05.02.2025
(73) Titulaire: Parker Hannifin EMEA S.à.r.l., 1163 Etoy (CH)
(72) Inventeur: ARAGONES, David, 74140 SCIEZ (FR); TARISSAN, Fabrice, 74370 VILLAZ (FR)
(74) Mandataire: Germain Maureau
(86) Numéro de dépôt international: PCT/EP2023/058015
(87) Numéro de publication internationale: WO 2023/186904

(56) Documents cités:
- DE-A1- 102015 016 197
- DE-U1- 8 508 621
- US-A- 4 300 597
- US-A1- 2008 175 726

## Description

### Domaine technique

La présente invention concerne un dispositif pare poussière destiné à protéger un raccord hydraulique et un élément de connexion hydraulique équipé incorporant un dispositif pare poussière.

### Technique antérieure

Dans de nombreux secteurs industriels comme, par exemple, celui du machinisme agricole, il est connu de connecter hydrauliquement un équipement à un système hydraulique par l'intermédiaire de raccords normalisés.

En pratique et dans le cas particulier du machinisme agricole, un tracteur est équipé sur sa face arrière d'un et généralement de plusieurs raccords hydrauliques rapides sur lesquels des raccords hydrauliques complémentaires viennent s'encliqueter. Cela permet de créer une liaison hydraulique qui assure le passage sans fuite du fluide hydraulique pour alimenter en puissance hydraulique l'équipement (remorque, charrue, semoir...).

En raison de leur position, les raccords sont exposés à des salissures telles que boues, pluie, poussière... et pour cela sont protégés par des dispositifs pare poussière qui comprennent de capuchons mobiles en rotation pour donner accès aux raccords et protéger des salissures les raccords lorsqu'ils ne sont pas utilisés.

Les dispositifs pare poussière assure une autre fonction importante qui est la collecte des fluides qui, inévitablement, s'échappent des raccords lors des opérations de connexion et déconnexion. Il est important de collecter ces fluides pour qu'ils ne viennent pas contaminer les sols. Pour cela, les dispositifs pare poussière incluent des canaux qui assurent la collecte des fluides puis les acheminent par gravité par un tuyau flexible vers un réservoir comme le montre par exemple le document DE-U-8508621. Le réservoir est lui-même vidé périodiquement.

Or, la configuration en termes d'implantation des raccords hydrauliques et du réservoir de collecte des fluides diffère d'un véhicule à l'autre. La conséquence est que chaque véhicule doit être équipé d'un dispositif pare poussière qui lui est propre pour notamment assurer la liaison avec le réservoir.

Ces problématiques de protection des raccords hydrauliques ne se posent pas exclusivement dans le domaine du machinisme agricole mais concernent, par exemple, les engins de travaux publics.

### Exposé de l'invention

Dans ce contexte technique, un but de la présente invention est d'améliorer la gestion des fluides de connexion et déconnexion de raccords hydraulique.

Un autre but de l'invention est de fournir un dispositif pare poussière qui puisse s'installer sur différents types de véhicules quel que soit l'implantation du ou des raccords hydrauliques et du réservoir de collecte de fluide associé.

Un autre but de l'invention est de fournir un élément de connexion hydraulique qui puisse s'installer sur différents types de véhicules quel que soit l'implantation du ou des raccords hydrauliques et du réservoir de collecte de fluide associé.

Selon un premier aspect, la présente invention concerne un dispositif pare poussière pour un raccord hydraulique sur lequel peut être connecté et déconnecté une prise hydraulique, ledit dispositif comprenant :
- un corps équipé d'une douille conçue pour s'engager sur ledit raccord hydraulique, d'un capuchon mobile en rotation entre une position fermée de protection dudit raccord hydraulique dans son état déconnecté et une position ouverte d'accès dudit raccord hydraulique dans son état connecté, et
- une tête sphérique attachée à une extrémité inférieure du corps et une goulotte reliée à la tête sphérique par une liaison rotule, et
- un canal ménagé dans le corps s'étendant depuis la douille jusqu'à la tête sphérique.

L'invention fournit ainsi un dispositif pare poussière qui dispose d'une goulotte orientable pouvant être orientée selon le positionnement respectif d'un raccord hydraulique et d'un réservoir de collecte d'huile de connexion/déconnexion dudit raccord. En d'autres termes, le dispositif pare poussière peut être configuré en fonction de tout type d'implantation d'un raccord et d'un réservoir de collecte d'huile.

Selon d'autres dispositions de l'invention prises isolément ou en combinaison :
- la goulotte comprend une cupule qui s'engage sur la tête sphérique par encliquetage.
- la cupule présente une ouverture dont le plan forme avec l'axe X de la goulotte un angle aigu.
- la cupule présente sur sa face interne une première zone sphérique qui ceinture l'ouverture de la cupule définie par un premier rayon qui est égal, au jeu de fonctionnement près, au rayon de la tête sphérique et une deuxième zone sphérique qui se trouve à la jonction de la cupule et de la goulotte d'écoulement qui est définie par un second rayon supérieur au rayon de la première zone sphérique.
- le dispositif comprend un capot supérieur borgne.
- le dispositif comprend un capot inférieur sur lequel est attachée la tête sphérique.
- le dispositif comprend un module de base qui inclut une portion de corps sur laquelle est fixée la douille, la chape de fixation du capuchon et une portion de canal.
- le dispositif comprend une entretoise de liaison dotée de moyens d'emboiture conçus pour relier deux modules de base.

Selon un deuxième aspect, l'invention concerne un élément de connexion hydraulique comprenant un carter dans lequel est disposé au moins un raccord hydraulique configuré pour être connecté et déconnecté à un coupleur caractérisé en ce que l'équipement hydraulique comprend un capuchon mobile entre une position fermée de protection dudit raccord hydraulique dans son état déconnecté et une position ouverte d'accès dudit raccord hydraulique dans son état connecté, et une cavité annulaire entourant l'extrémité de connexion dudit raccord hydraulique, un insert ayant une tête sphérique sur laquelle est engagée une goulotte, l'insert reliant hydrauliquement ladite cavité annulaire à la goulotte.

Selon différentes caractéristiques qui peuvent être mises en œuvre de manière indépendante et combinée :
- l'élément de connexion hydraulique comprend au moins deux coupleurs hydrauliques et un canal de collecte qui relie les deux cavités annulaires de coupleur adjacents.
- l'élément de connexion hydraulique comprend une chambre dans laquelle sont disposées des moyens de commandes du ou des coupleurs et un insert ayant une tête sphérique sur laquelle est engagée une goulotte, l'insert reliant hydrauliquement ladite chambre à la goulotte.
- la goulotte comprend une cupule qui s'engage sur la tête sphérique par encliquetage.
- la cupule présente une ouverture dont le plan forme avec l'axe X de la goulotte un angle aigu.
- la cupule présente sur sa face interne une première zone sphérique qui ceinture l'ouverture de la cupule définie par un premier rayon qui est égal, au jeu de fonctionnement près, au rayon de la tête sphérique et une deuxième zone sphérique qui se trouve à la jonction de la cupule et de la goulotte d'écoulement qui est définie par un second rayon supérieur au rayon de la première zone sphérique.

### Brève description des figures

D'autres caractéristiques et avantages de la présente invention apparaitront à la lecture de la description qui va suivre et à l'examen des figures annexées dans lesquelles :
La Figure 1 est une vue en perspective d'un dispositif pare poussière 1 ;
La Figure 2 est une vue de face du dispositif pare poussière 1 ;
La Figure 3 est une vue en coupe selon le plan de coupe A-A de la figure 2 ;
La Figure 4 est une vue à une échelle agrandie de la partie inférieure du dispositif pare poussière 1 ;
La Figure 5 est une vue en coupe selon le plan de coupe B-B de la figure 3 ;
La Figure 6 est une vue schématique d'un dispositif pare poussière 1 implanté sur un véhicule ;
La Figure 7 est une vue montrant une goulotte d'écoulement dans une première orientation ;
La Figure 8 est une vue montrant la goulotte d'écoulement dans une deuxième orientation ;
La Figure 9 est une vue montrant la goulotte d'écoulement dans une troisième orientation ;
La Figure 10 est une vue en perspective d'un équipement de connexion hydraulique ;
La Figure 11 est vue à une échelle agrandie et en coupe d'une goulotte ;

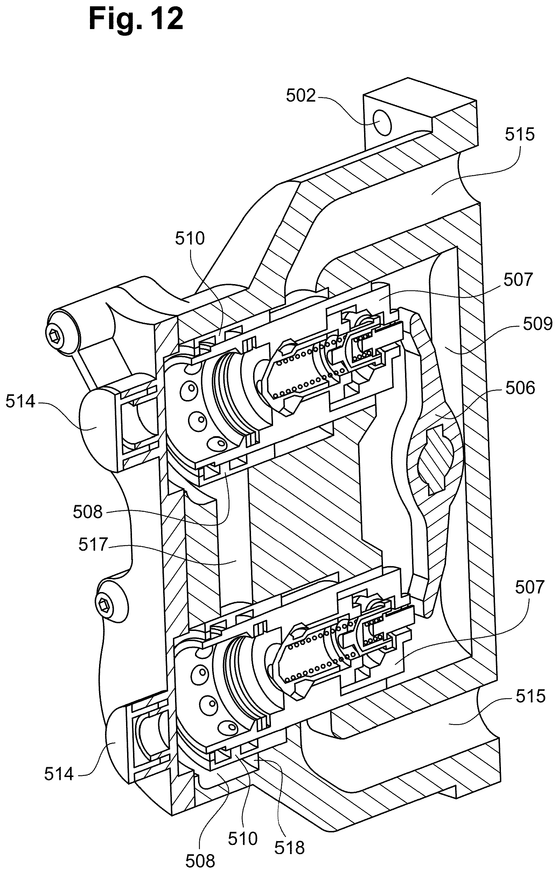

La Figure 12 est une vue en coupe de l'équipement de connexion hydraulique de la figure 10.

### Description de l'invention

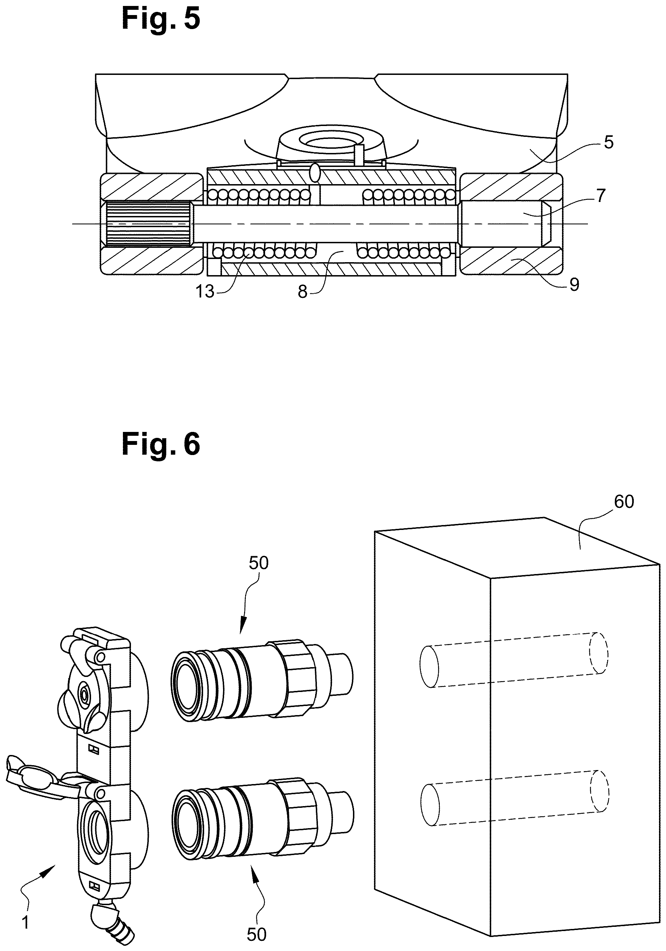

Dans sa forme de réalisation illustrée sur les figures, le dispositif pare poussière 1 est conçu pour assurer la protection de deux raccords 50 dits rapides dont on peut voir un exemple schématique sur la Figure 6. Les raccords 50 sont eux même fixés sur un engin 60 tel qu'un tracteur ou un outil agricole, de travaux publics ou autre. Il est précisé que, par poussière, on entend au sens générique tous types de salissures tels que boue, pluie, corps étrangers susceptibles de venir se placer sur un raccord 50 et en gêner le fonctionnement.

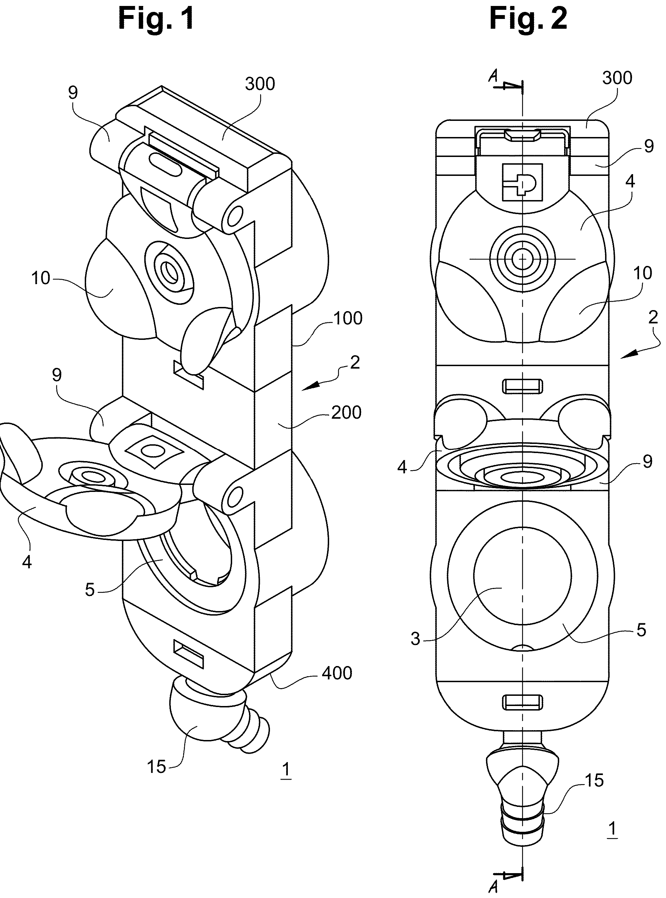

En référence notamment aux figures 1 et 2, le dispositif pare poussière 1 comprend un corps 2 de forme générale allongée ayant une face interne qui est destinée à être en prise avec les raccords 50 et une face externe opposée à la face interne.

Dans le présent exemple de réalisation, le corps 2 comprend deux ouvertures circulaires 3 qui sont, par convention, identifiées comme ouverture supérieure 3a et ouverture inférieure 3b. Comme on le verra plus loin le dispositif pare poussière est conçu pour être orienté verticalement.

Sur la face externe du corps 2, sont disposés deux capuchons pivotants 4 qui viennent chacun obturer l'ouverture 3 circulaire pratiquée dans le corps 2. Un joint 5 peut être disposé autour de l'ouverture 3. Comme on peut le voir sur la figure 5, chaque capuchon 5 est relié au corps par l'intermédiaire d'un axe 7 qui est engagé à la fois dans un perçage 8 pratiqué dans le capuchon 5 et dans une chape 9 pratiquée dans le corps. Un ressort 13 en épingle est monté coaxialement avec l'axe interposé entre le capuchon 5 et le corps 2 de manière à maintenir le capuchon 5 en position d'obturation. Chacun des capuchons 5 est doté de deux oreilles 10 qui permettent à un utilisateur de venir exercer une prise en vue de le faire pivoter vers une position d'ouverture en s'opposant pour cela à l'action du ressort 13.

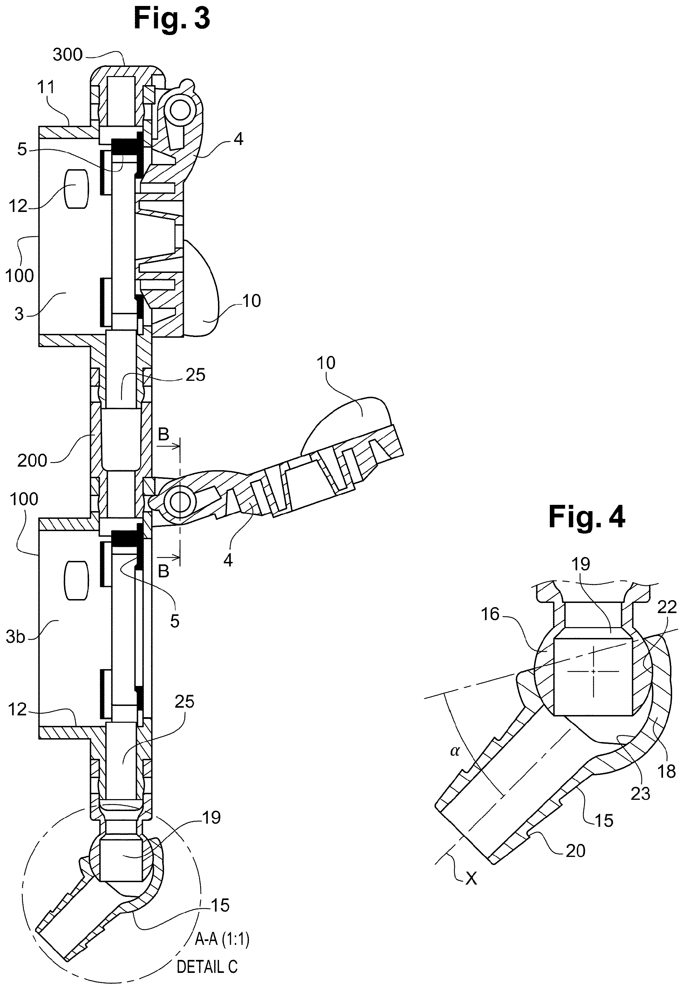

Sur la face interne, le corps 2 comprend deux douilles 11 circulaires qui sont positionnées sur le corps 2 pour ceinturer les deux ouvertures 3. Comme on peut le voir sur la Figure 3, chaque douille 11 est pourvue sur sa face interne de trois bossages 12 disposés à 120° qui permettent un emboitage élastique de type snap-fit du corps 2 sur un raccord 50 hydraulique.

A son extrémité inférieure, le corps 2 reçoit une goulotte d'écoulement 15 orientable. La liaison entre la goulotte d'écoulement 15 est la partie inférieure du corps est du type rotule. Pour cela, le corps 2 est pourvu d'une tête sphérique 16 creuse sur laquelle est engagée la goulotte d'écoulement 15. A cet effet, la goulotte d'écoulement 15 est pourvue d'une cupule 18 qui s'engage sur la tête sphérique 16. En pratique, la goulotte d'écoulement 15 est réalisée en matière plastique pour que la cupule 18 puisse s'engager par encliquetage sur la tête sphérique 16. Les cotes respectives de la tête sphérique 16 et de la cupule 18 permettent un ajustement qui autorise le glissement de la cupule 18 sur la tête sphérique 16 créant ainsi une liaison rotule qui permet d'orienter la goulotte d'écoulement 15 selon de multiples directions. La tête sphérique 16 comprend un perçage 19 qui débouche dans la goulotte d'écoulement 15.

La goulotte d'écoulement 15 peut être dotée sur sa face extérieure de nervures de retenues 20 sur lesquels un tuyau flexible (non représenté) peut être engagé. Le tuyau flexible est lui-même relié à un réservoir dans lequel s'écoule par gravité les fluides hydrauliques provenant de la connexion et déconnexion des raccords.

Dans l'exemple illustré sur les figures, la cupule 18 qui vient s'encliqueter sur la tête sphérique 16 présente une asymétrie par rapport à l'axe de longitudinal X de la goulotte d'écoulement 15. En pratique, la cupule 18 peut présenter une ouverture qui définit un plan sécant avec l'axe longitudinal de la goulotte d'écoulement 15 selon un angle α aigu qui peut être compris entre 25° et 45° et être, par exemple, de l'ordre de 30°. Comme on peut le voir sur la Figure 4, la cupule 18 présente sur sa face interne une première zone sphérique 22 qui ceinture l'ouverture de la cupule 18 définie par un premier rayon qui est égal, au jeu de fonctionnement près, au rayon de la tête sphérique 16 et une deuxième zone sphérique 23 qui se trouve à la jonction de la cupule 18 et de la goulotte d'écoulement 15 qui est définie par un second rayon supérieur au rayon de la première zone sphérique.

On note également que le corps 2 incorpore un canal 25 de collecte des fluides de connexion/déconnexion.

On peut se reporter à la Figure 3 pour apprécier la structure et le parcours du canal 23. Ce canal est ménagé dans l'épaisseur du corps 2 et parcourt le dispositif pare poussière 1 selon toute sa longueur. Le canal 25 relie ainsi l'ouverture supérieure à l'ouverture inférieure et l'ouverture inférieure à la goulotte d'écoulement 15.

Dans l'exemple montré sur les figures, le dispositif pare poussière 1 présente une structure modulaire formé par des éléments assemblables.

En pratique, le dispositif pare poussière 1 peut comprendre un module de base 100 qui peut être obtenu par injection plastique. Ce module de base 100 inclut une portion de corps 2 sur laquelle est fixée la douille 11 et la chape de fixation du capuchon 5. Le module de base 100 comprend également une portion de canal 25.

Il est prévu une entretoise de liaison 200 qui permet de relier deux modules de base adjacents. L'entretoise de liaison 200 est elle-même dotée d'un passage qui forme une portion de canal 25.

Il est également prévu un capot supérieur 300 borgne pour obturer le dispositif à son extrémité supérieure et un capot inférieur 400 qui reçoit la tête sphérique 16. Le capot inférieur 400 est pourvu d'une portion de canal 25 qui assure la continuité fluidique depuis le module de base supérieur et qui débouche de la tête sphérique 16.

La connexion des différents éléments du dispositif pare poussière 1 est réalisée par un système d'emboitures mâles/femelles dont les modules de base 100, entretoise de liaison 200, capot supérieur 300 et capot inférieur 400 sont pourvus.

Dans l'exemple représenté sur les figures, le dispositif pare poussière 1 comprend deux modules de base mais, selon la configuration des raccords 50 qui sont à protéger, il est possible de prévoir de 1 à n module(s) de base 100.

En particulier, la figure 6 montre un dispositif destiné à protéger deux raccords 50 hydrauliques.

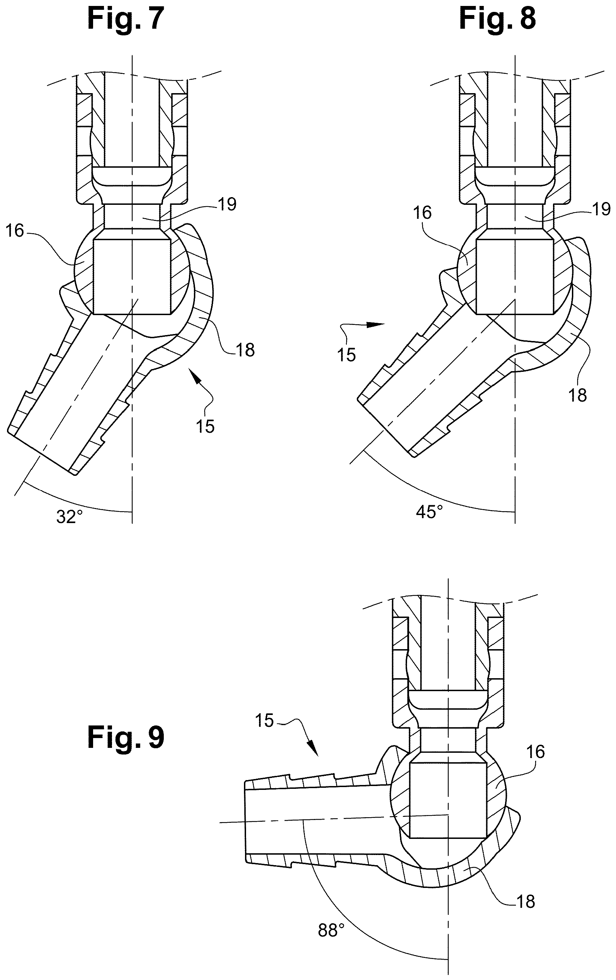

Les figures 7 à 9 illustrent l'amplitude angulaire que peut prendre la goulotte d'écoulement 15 ce qui permet au dispositif pare poussière 1 selon l'invention de s'adapter à des véhicules dont le réservoir est positionné à différents emplacements par rapport aux raccords 50 hydrauliques.

En d'autres termes, les dispositifs pare poussière constituent un élément standard qui peut équiper une grande variété de véhicules notamment agricoles quel que soit la position des raccords 50 hydrauliques et la position relative du réservoir de collecte de fluide de connexion/déconnexion.

Selon un autre aspect, la présente invention concerne un ensemble de couplage hydraulique 500.

L'élément de connexion comprend un carter 501 qui peut être, par exemple, une pièce de fonderie. Le carter 501 peut présenter une forme parallélépipédique orientée verticalement. Le carter peut être doté de perçages 502 sur sa face arrière pour assurer sa fixation, par exemple, sur une machine agricole ou sur une machine de travaux publics.

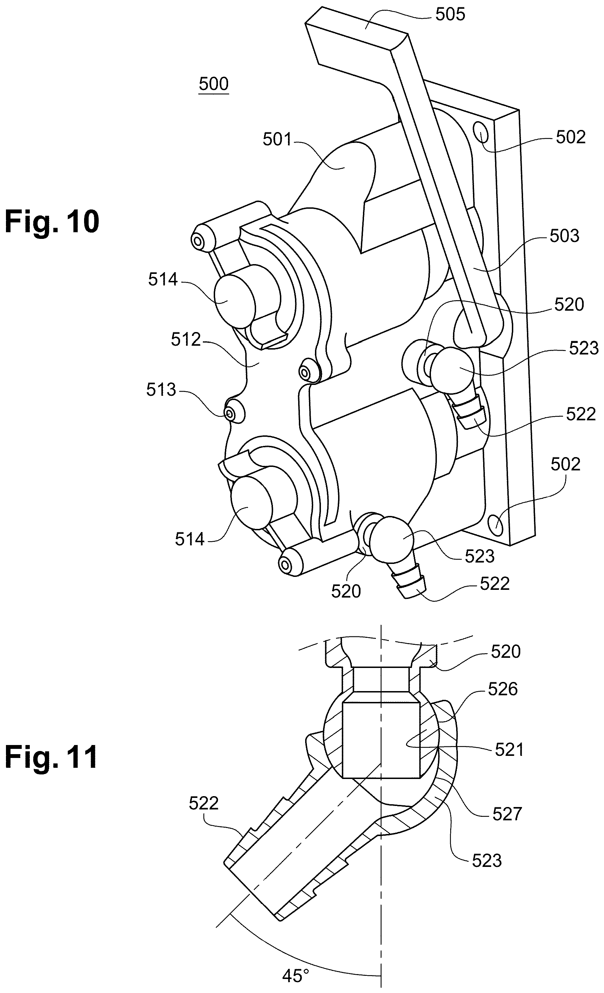

Dans l'exemple de réalisation montré sur les figures 10 et 11, l'élément de connexion reçoit deux raccords rapides 507. Il s'agit de raccords rapides femelles qui sont mobiles axialement entre une position de couplage dans laquelle un coupleur mâle (non représenté) est hydrauliquement connecté à un raccord rapide femelle pour permettre un écoulement de fluide et une position de libération dans laquelle le coupleur mâle peut être libéré.

Dans l'exemple illustré sur les figures 10 et 11, les coupleurs 507 sont actionnés par un levier 503 qui possède une partie de poignée 505 qui est externe au carter 501 et une partie de bras 506 qui s'étend à partir du levier 503 à l'intérieur du carter 501 dans une chambre 509. Il s'agit d'un moyen de commande des coupleurs 507 non limitatif; d'autres moyens de commandes peuvent être envisagés.

Chacun des raccords rapides 507 est inséré dans un logement pratiqué dans le carter 501 et débouche sur la face avant du carter 501. L'extrémité de connexion des coupleurs 507 est placée dans une cavité annulaire 508. Une douille 510 engagée sur l'extrémité de connexion de chaque raccord 507 fait office de palier.

Sur sa face avant, l'élément de connexion reçoit une platine 512 qui est fixée par des vis 513. La platine 512 qui peut être en matière plastique supporte deux capuchons 514 pivotants qui sont disposés en regard d'un raccord rapide 507 pour en fermer l'accès et en assurer la protection lorsqu'ils ne sont pas en utilisation.

Le carter 501 est doté de canaux d'alimentation 515 qui amènent le fluide hydraulique depuis une pompe vers les raccords rapides 507 qui selon l'état de chacun laisse passer le fluide hydraulique ou le retienne.

On note également la présence d'un canal de collecte 517 qui s'étend entre les deux cavités annulaires 508.

Au niveau du raccord inférieur, le carter est pourvu d'un perçage 518 qui débouche dans la cavité annulaire 508 qui, par gravité, collecte les fluides hydrauliques provenant de la connexion et de la déconnexion des raccords 507 avec des coupleurs males.

Un insert fileté 520 est visé dans le perçage 512. Comme le montre en coupe la figure 11, l'insert 520 est de plus pourvu d'une tête sphérique 521 percée sur laquelle est fixée une goulotte 522. La liaison entre la tête sphérique 521 et la goulotte 522 est réalisée pour une cupule 523 qui s'engage sur la tête sphérique 521 par encliquetage. La liaison rotule ainsi créée permet une orientation multidirectionnelle de la goulotte 522 par rapport au carter 501.

Il peut également être prévu de doter la chambre 509 dans laquelle est placé le bras d'un perçage dans lequel visé un insert fileté 520 identique à celui qui permet au fluide hydraulique de la cavité annulaire 508 de s'écouler.

La goulotte d'écoulement 522 peut être dotée sur sa face extérieure de nervures de retenues sur lesquels un tuyau flexible (non représenté) peut être engagé. Le tuyau flexible est lui-même relié à un réservoir dans lequel s'écoule par gravité les fluides hydrauliques provenant de la connexion et déconnexion des raccords.

Dans l'exemple illustré sur les figures, la cupule 523 qui vient s'encliqueter sur la tête sphérique 521 présente une asymétrie par rapport à l'axe de longitudinal de la goulotte d'écoulement 522. En pratique, la cupule 523 peut présenter une ouverture qui définit un plan sécant avec l'axe longitudinal de la goulotte d'écoulement 15 selon un angle α aigu qui peut être compris entre 25° et 45° et être, par exemple, de l'ordre de 30° de la même manière que ce qui est montré à la Figure 4.

La cupule 523 présente sur sa face interne une première zone sphérique 526 qui ceinture l'ouverture de la cupule 18 définie par un premier rayon qui est égal, au jeu de fonctionnement près, au rayon de la tête sphérique 521 et une deuxième zone sphérique 527 qui se trouve à la jonction de la cupule 523 et de la goulotte d'écoulement 522 qui est définie par un second rayon supérieur au rayon de la première zone sphérique 526.

Dans ce deuxième aspect, l'invention permet de d'orienter les fluides de connexion dans des directions multiples et donc de s'adapter à des architectures variées de véhicules agricoles ou autres.

## Revendications

1. Dispositif pare poussière (1) pour un raccord (50) hydraulique sur lequel peut être connecté et déconnecté une prise hydraulique comprenant :
- un corps (2) équipé d'une douille (11) conçue pour s'engager sur ledit raccord (50) hydraulique, d'un capuchon (4) mobile entre une position fermée de protection dudit raccord (50) hydraulique dans son état déconnecté et une position ouverte d'accès dudit raccord (50) hydraulique dans son état connecté, et
- une tête sphérique (16) attachée à une extrémité inférieure du corps (2) et une goulotte (15) reliée à la tête sphérique (16) par une liaison rotule, et
- un canal (25) de collecte ménagé dans le corps (2) s'étendant depuis la douille (11) jusqu'à la tête sphérique (16).

2. Dispositif pare poussière (1) selon la revendication 1, **caractérisé en ce que** la goulotte (15) comprend une cupule (18) qui s'engage sur la tête sphérique (16) par encliquetage.

3. Dispositif pare poussière (1) selon la revendication 2, **caractérisé en ce que** la cupule (18) présente une ouverture dont le plan forme avec l'axe X de la goulotte (15) un angle aigu.

4. Dispositif pare poussière (1) selon la revendication 2 ou la revendication 3, **caractérisée en ce que** la cupule (18) présente sur sa face interne une première zone sphérique (22) qui ceinture l'ouverture de la cupule (18) définie par un premier rayon qui est égal, au jeu de fonctionnement près, au rayon de la tête sphérique (16) et une deuxième zone sphérique (23) qui se trouve à la jonction de la cupule (18) et de la goulotte d'écoulement (15) qui est définie par un second rayon supérieur au rayon de la première zone sphérique.

5. Dispositif pare poussière (1) selon l'une des revendications 1 à 4, **caractérisé en ce que** le dispositif comprend un capot supérieur borgne (300).

6. Dispositif pare poussière (1) selon l'une des revendications 1 à 5, **caractérisé en ce que** le dispositif comprend un capot inférieur (400) sur lequel est attachée la tête sphérique (16).

7. Dispositif pare poussière (1) selon l'une de revendications 1 à 6, **caractérisé en ce que** le dispositif comprend un module de base (100) qui inclut une portion de corps (2) sur laquelle est fixée la douille (11), la chape de fixation du capuchon (5) et une portion de canal (25).

8. Dispositif pare poussière (1) selon la revendication 7, **caractérisé en ce que** le dispositif comprend une entretoise de liaison (200) dotée de moyens d'emboiture conçus pour relier deux modules de base (100).

9. Elément de connexion hydraulique (500) comprenant un carter dans lequel est disposé au moins un raccord (507) hydraulique configuré pour être connecté et déconnecté à un coupleur, l'équipement hydraulique comprenant un capuchon (514) mobile entre une position fermée de protection dudit raccord (507) hydraulique dans son état déconnecté et une position ouverte d'accès dudit raccord (507) hydraulique dans son état connecté, et une cavité annulaire (508) entourant l'extrémité de connexion dudit raccord (507) hydraulique, un insert (520) ayant une tête sphérique (521) sur laquelle est engagée une goulotte (522), l'insert (520) reliant hydrauliquement ladite cavité annulaire (508) à la goulotte (522).

10. Elément de connexion hydraulique (500) selon la revendication 9, **caractérisé en ce que** l'élément de connexion hydraulique comprend au moins deux coupleurs (507) hydrauliques et un canal de collecte (517) qui relie les deux cavités annulaires (508) de coupleur (507) adjacents.

11. Elément de connexion hydraulique (500) selon l'une des revendications 9 à 10, **caractérisé en ce que** l'élément de connexion hydraulique (500) comprend une chambre (509) dans laquelle sont disposées des moyens de commandes du ou des coupleurs (507) et un insert (520) ayant une tête sphérique (521) sur laquelle est engagée une goulotte (522), l'insert (520) reliant hydrauliquement ladite chambre (509) à la goulotte (522).

12. Elément de connexion hydraulique selon l'une des revendications 9 à 11, **caractérisé en ce que** la goulotte (15) comprend une cupule (18) qui s'engage sur la tête sphérique (16) par encliquetage.

13. Elément de connexion hydraulique selon la revendication 12, **caractérisé en ce que** la cupule (18) présente une ouverture dont le plan forme avec l'axe X de la goulotte (15) un angle aigu.

14. Elément de connexion hydraulique selon l'une des revendications 12 à 13, **caractérisée en ce que** la cupule (523) présente sur sa face interne une première zone sphérique (526) qui ceinture l'ouverture de la cupule (523) définie par un premier rayon qui est égal, au jeu de fonctionnement près, au rayon de la tête sphérique (521) et une deuxième zone sphérique (527) qui se trouve à la jonction de la cupule (523) et de la goulotte d'écoulement (522) qui est définie par un second rayon supérieur au rayon de la première zone sphérique.

## Patentansprüche

1. Staubschutzvorrichtung (1) für einen hydraulischen Anschluss (50), an dem ein hydraulischer Stecker angeschlossen und getrennt werden kann, umfassend:
- einen Körper (2), der mit einer Hülse (11), die so ausgelegt ist, dass sie in den hydraulischen Anschluss (50) eingreift, und mit einer Kappe (4) ausgestattet ist, die zwischen einer geschlossenen Schutzstellung des hydraulischen Anschlusses (50) in seinem getrennten Zustand und einer offenen Zugangsstellung des hydraulischen Anschlusses (50) in seinem verbundenen Zustand beweglich ist, und
- einen Kugelkopf (16), der an einem unteren Ende des Körpers (2) befestigt ist, und eine Rinne (15), die über eine Kugelverbindung mit dem Kugelkopf (16) verbunden ist, und
- einen im Körper (2) angeordneten Sammelkanal (25), der sich von der Hülse (11) bis zum Kugelkopf (16) erstreckt.

2. Staubschutzvorrichtung (1) nach Anspruch 1, **dadurch gekennzeichnet, dass** die Rinne (15) eine Schale (18) umfasst, die durch Einrasten in den Kugelkopf (16) eingreift.

3. Staubschutzvorrichtung (1) nach Anspruch 2, **dadurch gekennzeichnet, dass** die Schale (18) eine Öffnung aufweist, deren Ebene mit der X-Achse der Rinne (15) einen spitzen Winkel bildet.

4. Staubschutzvorrichtung (1) nach Anspruch 2 oder Anspruch 3, **dadurch gekennzeichnet, dass** die Schale (18) an ihrer Innenseite einen ersten kugelförmigen Bereich (22) aufweist, der die Öffnung der Schale (18) umgibt und durch einen ersten Radius definiert ist, der bis auf das Betriebsspiel gleich dem Radius des Kugelkopfs (16) ist, und einen zweiten kugelförmigen Bereich (23), der sich an der Verbindung zwischen der Schale (18) und der Ablaufrinne (15) befindet und durch einen zweiten Radius definiert ist, der größer ist als der Radius des ersten kugelförmigen Bereichs.

5. Staubschutzvorrichtung (1) nach einem der Ansprüche 1 bis 4, **dadurch gekennzeichnet, dass** die Vorrichtung eine blinde obere Abdeckung (300) umfasst.

6. Staubschutzvorrichtung (1) nach einem der Ansprüche 1 bis 5, **dadurch gekennzeichnet, dass** die Vorrichtung eine untere Abdeckung (400) umfasst, an der der Kugelkopf (16) befestigt ist.

7. Staubschutzvorrichtung (1) nach einem der Ansprüche 1 bis 6, **dadurch gekennzeichnet, dass** die Vorrichtung ein Grundmodul (100) umfasst, das einen Körperabschnitt (2) einschließt, an dem die Hülse (11), die Befestigungshalterung der Kappe (5) und ein Kanalabschnitt (25) befestigt sind.

8. Staubschutzvorrichtung (1) nach Anspruch 7, **dadurch gekennzeichnet, dass** die Vorrichtung einen Verbindungsabstandshalter (200) umfasst, der mit Einsteckmitteln versehen ist, die so ausgelegt sind, dass sie zwei Grundmodule (100) verbinden.

9. Hydraulisches Verbindungselement (500), umfassend ein Gehäuse, in dem mindestens ein hydraulischer Anschluss (507), der so eingerichtet ist, dass er mit einer Kupplung verbunden und getrennt werden kann, wobei die hydraulische Ausrüstung eine Kappe (514) umfasst, die zwischen einer geschlossenen Schutzstellung des hydraulischen Anschlusses (507) in seinem getrennten Zustand und einer offenen Zugangsstellung des hydraulischen Anschlusses (507) in seinem verbundenen Zustand beweglich ist, und ein ringförmiger Hohlraum (508), der das Verbindungsende des hydraulischen Anschlusses (507) umgibt, und ein Einsatz (520) angeordnet ist, der einen Kugelkopf (521) aufweist, an dem eine Rinne (522) eingesetzt ist, wobei der Einsatz (520) den ringförmigen Hohlraum (508) hydraulisch mit der Rinne (522) verbindet.

10. Hydraulisches Verbindungselement (500) nach Anspruch 9, **dadurch gekennzeichnet, dass** das hydraulische Verbindungselement mindestens zwei hydraulische Kupplungen (507) und einen Sammelkanal (517) umfasst, der die beiden ringförmigen Hohlräume (508) benachbarter Kupplung (507) verbindet.

11. Hydraulisches Verbindungselement (500) nach einem der Ansprüche 9 bis 10, **dadurch gekennzeichnet, dass** das hydraulische Verbindungselement (500) eine Kammer (509), in der die Steuermittel der Kupplung(en) (507) angeordnet sind, und einen Einsatz (520) umfasst, der einen Kugelkopf (521) aufweist, an dem eine Rinne (522) eingesetzt ist, wobei der Einsatz (520) die Kammer (509) mit der Rinne (522) hydraulisch verbindet.

12. Hydraulisches Verbindungselement nach einem der Ansprüche 9 bis 11, **dadurch gekennzeichnet, dass** die Rinne (15) eine Schale (18) umfasst, die durch Einrasten in den Kugelkopf (16) eingreift.

13. Hydraulisches Verbindungselement nach Anspruch 12, **dadurch gekennzeichnet, dass** die Schale (18) eine Öffnung aufweist, deren Ebene mit der X-Achse der Rinne (15) einen spitzen Winkel bildet.

14. Hydraulisches Verbindungselement nach einem der Ansprüche 12 bis 13, **dadurch gekennzeichnet, dass** die Schale (523) an ihrer Innenseite einen ersten kugelförmigen Bereich (526), der die Öffnung der Schale (523) umgibt und durch einen ersten Radius definiert ist, der bis auf das Betriebsspiel gleich dem Radius des Kugelkopfs (521) ist, und einen zweiten kugelförmigen Bereich (527) aufweist, der sich an der Verbindung zwischen der Schale (523) und der Ablaufrinne (522) befindet und durch einen zweiten Radius definiert ist, der größer ist als der Radius des ersten kugelförmigen Bereichs.

## Claims

1. A dust-shield device (1) for a hydraulic fitting (50) to which a hydraulic receptacle can be connected and disconnected, comprising:
- a body (2) equipped with a socket (11) designed to engage said hydraulic fitting (50), with a cap (4) movable between a closed position for protecting said hydraulic fitting (50) in its disconnected state and an open position for access of said hydraulic fitting (50) in its connected state, and
- a spherical head (16) attached to a lower end of the body (2) and a chute (15) connected to the spherical head (16) by a ball joint, and
- a collection channel (25) provided in the body (2) extending from the socket (11) to the spherical head (16).

2. The dust-shield device (1) according to claim 1, **characterized in that** the chute (15) comprises a cup (18) which engages on the spherical head (16) by snap-fitting.

3. The dust-shield device (1) according to claim 2, **characterized in that** the cup (18) has an opening whose plane forms an acute angle with the axis X of the chute (15).

4. The dust-shield device (1) according to claim 2 or claim 3, **characterized in that** the cup (18) has, on its internal face, a first spherical zone (22) which encircles the opening of the cup (18) defined by a first radius which is equal, within operating clearance, to the radius of the spherical head (16) and a second spherical zone (23) which is located at the junction of the cup (18) and the flow chute (15) which is defined by a second radius greater than the radius of the first spherical zone.

5. The dust-shield device (1) according to any of claims 1 to 4, **characterized in that** the device comprises a blind upper cover (300).

6. The dust-shield device (1) according to any of claims 1 to 5, **characterized in that** the device comprises a lower cover (400) to which the spherical head (16) is attached.

7. The dust-shield device (1) according to any of claims 1 to 6, **characterized in that** the device comprises a base module (100) which includes a portion of the body (2) to which is fastened the socket (11), the cap fastening yoke (5), and a channel portion (25).

8. The dust-shield device (1) according to claim 7, **characterized in that** the device comprises a linking spacer (200) provided with nesting means designed to link two base modules (100).

9. A hydraulic connection element (500) comprising a casing in which at least one hydraulic fitting (507) is disposed, configured to be connected and disconnected to a coupler, the hydraulic equipment comprising a cap (514) movable between a closed position for protecting said hydraulic fitting (507) in its disconnected state and an open position for access of said hydraulic fitting (507) in its connected state, and an annular cavity (508) surrounding the connection end of said hydraulic fitting (507), an insert (520) having a spherical head (521) on which a chute (522) is engaged, the insert (520) hydraulically connecting said annular cavity (508) to the chute (522).

10. The hydraulic connection element (500) according to claim 9, **characterized in that** the hydraulic connection element comprises at least two hydraulic couplers (507) and a collection channel (517) connecting the two annular cavities (508) of adjacent couplers (507).

11. The hydraulic connection element (500) according to any of claims 9 to 10, **characterized in that** the hydraulic connection element (500) comprises a chamber (509) in which means for controlling the coupler(s) (507) are disposed, and an insert (520) having a spherical head (521) on which a chute (522) is engaged, the insert (520) hydraulically connecting said chamber (509) to the chute (522).

12. The hydraulic connection element according to any of claims 9 to 11, **characterized in that** the chute (15) comprises a cup (18) which engages on the spherical head (16) by snap-fitting.

13. The hydraulic connection element according to claim 12, **characterized in that** the cup (18) has an opening whose plane forms an acute angle with the axis X of the chute (15).

14. The hydraulic connection element according to any of claims 12 to 13, **characterized in that** the cup (523) has, on its inner face, a first spherical zone (526) which encircles the opening of the cup (523) defined by a first radius which is equal, within operating clearance, to the radius of the spherical head (521) and a second spherical zone (527) which is located at the junction of the cup (523) and the flow chute (522) which is defined by a second radius greater than the radius of the first spherical zone.
